# EUROPÄISCHE PATENTSCHRIFT

(11) **EP 3 608 173 B1**
(45) Veröffentlichungstag und Bekanntmachung des Hinweises auf die Patenterteilung: **07.04.2021**
(21) Anmeldenummer: 19190411.9
(22) Anmeldetag: 07.08.2019
(51) Int. Cl.: B60R 1/06

(54) **AUSSENSPIEGELVORRICHTUNG FÜR EIN KRAFTFAHRZEUG, KRAFTFAHRZEUG**
EXTERNAL REAR VIEW MIRROR DEVICE FOR A VEHICLE, VEHILCE
DISPOSITIF DE RÉTROVISEUR EXTERIEUR POUR UN VEHICULE, VEHICULE

(30) Priorität: 07.08.2018 DE 102018213221
(43) Veröffentlichungstag der Anmeldung: 12.02.2020
(73) Patentinhaber: Volkswagen AG, 38440 Wolfsburg (DE)
(72) Erfinder: Nabel, Robert, 39387 Oschersleben (DE); Hähnel, Mathias, 38477 Jembke (DE)
(74) Vertreter: Clarenbach, Carl-Philipp

(56) Entgegenhaltungen:
- EP-A1- 1 787 862
- DE-A1-102005 019 778
- DE-B1- 2 704 226
- US-A1- 2015 266 425

## Beschreibung

Die Erfindung betrifft eine Außenspiegelvorrichtung für ein Kraftfahrzeug, mit einem Spiegelgehäuse, in welchem zumindest ein Spiegelelement und/oder mindestens ein Kamerasensor angeordnet ist, mit einem Spiegelfuß, der einendig das Spiegelgehäuse trägt und anderendig an dem Kraftfahrzeug befestigbar oder befestigt ist und mit zumindest einem Strömungsleitelement zum Beeinflussen, insbesondere Verbessern, einer Luftströmung an der Außenspiegelvorrichtung.

Weiterhin betrifft die Erfindung ein Kraftfahrzeug mit einer derartigen Außenspiegelvorrichtung.

Eine Außenspiegelvorrichtung ist beispielsweise aus der Offenlegungsschrift DE 10 2010 017 373 A1 bekannt. Diese weist ein Spiegelgehäuse auf, in welchem ein Spiegel verstellbar angeordnet ist, sowie einen Spiegelfuß, durch welchen das Spiegelgehäuse an der Außenkante des Kraftfahrzeugs angeordnet ist. Darüber hinaus ist dem Spiegelgehäuse ein Luftleitelement zugeordnet, das optional auch verstellbar ist, um einen Luftstrom in Richtung des Spiegels zu lenken, um diesen von gegebenenfalls darauf befindlichen Wassertopfen zu befreien.

Aus der Offenlegungsschrift US 5,903,389 B1 ist eine weitere Außenspiegelvorrichtung bekannt, bei welcher am Spiegelgehäuse mehrere Luftleitelemente ausgebildet sind, um eine verbesserte Ablösung einer Luftströmung während des Fahrbetriebs sowie ein verbessertes Geräuschverhalten zu erzielen.

Die Offenlegungsschrift US 2015/0266425 A1 offenbart weiterhin eine Außenspiegelvorrichtung, bei welcher an einer Unterseite des Spiegelfußes zwei schräg von dem Kraftfahrzeug weg verlaufende Strömungsleitelemente angeordnet sind, um auftretende Luftströmungen von einer Seitenwand des Fahrzeugs weg zu leiten.

Der Erfindung liegt die Aufgabe zugrunde, eine verbesserte Außenspiegelvorrichtung zu schaffen, bei welcher das Strömungsverhalten der Luft im Fahrbetrieb weiter verbessert insbesondere Strömungsgeräusche und Windwiderstand reduziert werden.

Die der Erfindung zugrundeliegende Aufgabe wird durch eine Außenspiegelvorrichtung mit den Merkmalen des Anspruchs 1 gelöst. Diese hat den Vorteil, dass eine wirbelbehaftete Ablösung der Strömung am Spiegelfuß reduziert oder vermieden wird. Erfindungsgemäß wird hierdurch erreicht, dass das Strömungsleitelement an dem Spiegelfuß derart ausgebildet ist, dass es senkrecht zur Ablösekante der Strömung an dem Spiegelfuß an der Ablösekante endet. Das Strömungsleitelement erstreckt sich somit entlang des Spiegelfuß, wobei es sich zumindest im Endabschnitt im Bereich der Ablösekante senkrecht zur Ablösekante erstreckt, sodass die Strömung senkrecht zur Ablösekante geführt ist. Dadurch wird das Strömungsverhalten am Spiegelfuß verbessert und die Geräuschemission reduziert. Durch das Anordnen der Strömungsleitelemente am Spiegelfuß wird die Luftströmung insbesondere im Bereich nahe zu der Fahrzeugkarosserie beziehungsweise der Fahrzeugaußenhaut beeinflusst, sodass insbesondere an der Außenhaut entstehende Geräusche durch den Fahrtwind vermieden oder zumindest reduziert werden.

Erfindungsgemäß sind mehrere parallel zueinander verlaufend ausgebildete Strömungsleitelemente an dem Spiegelfuß angeordnet. Je nach Größe des Spiegelfuß, also je nach Längserstreckung von dem Kraftfahrzeug bis zum Spiegelgehäuse ist die Anzahl der Strömungsleitelemente reduziert oder erhöht, wobei mit zunehmender Länge die Anzahl der Strömungsleitelemente ebenfalls erhöht wird. Dadurch ist über die Längserstreckung des Spiegelfuß gewährleistet, dass eine vorteilhafte Luftströmungsführung erfolgt.

Gemäß einer bevorzugten Weiterbildung der Erfindung ist das jeweilige Strömungsleitelement, also das zumindest eine Strömungsleitelement oder die mehreren Strömungsleitelemente, jeweils einstückig mit dem Spiegelfuß, insbesondere mit einem Fußgehäuse des Spiegelfuß ausgebildet. Dadurch ist eine vorteilhafte Integration des jeweiligen Strömungsleitelements in den Spiegelfuß gewährleistet, die insbesondere eine nachträgliche Montage vermeidet. Alternativ ist das jeweilige Strömungsleitelement als separates Element ausgebildet und an dem Fußgehäuse des Spiegelfuß befestigt.

Erfindungsgemäß ist vorgesehen, dass das jeweilige Strömungsleitelement als von dem Spiegelfuß vorstehendes Stegelement ausgebildet ist. Dadurch steht das jeweilige Strömungsleitelement von dem Spiegelfuß vor und erlaubt kostengünstig eine vorteilhafte Luftströmungsführung.

Gemäß einer bevorzugten Weiterbildung der Erfindung weist das jeweilige Strömungsleitelement zumindest einen gekrümmten Abschnitt in seiner Längserstreckung auf, insbesondere um als Wirbelstromgenerator zu wirken. Durch die Krümmung wird erreicht, dass die Luftströmungsrichtung verändert, wodurch insbesondere Wirbelströme an der Ablösekante entstehen, die insbesondere im Bereich der Ablösekante zu einem verbesserten Ablöseverhalten führen. Dies ist insbesondere dann der Fall, wenn die Ablösekante sich nicht senkrecht zur Fahrtrichtung erstreckt. Bevorzugt erstreckt sich die Ablösekante nicht senkrecht zur Luftströmungsrichtung in Fahrtrichtung, sondern schräg zur normalen Luftströmungsrichtung, sodass der Spiegelfuß mechanisch für das Tragen des Spiegelgehäuses optimal auslegbar und konstruierbar ist. Insbesondere ist der Spiegelfuß insgesamt schräg gestellt ausgebildet, um die Tragfähigkeit des Spiegelfuß zu optimieren.

Weiterhin ist bevorzugt vorgesehen, dass das jeweilige Strömungsleitelement parallel zu einem Luftströmungsrichtung an dem Spiegelfuß beginnt. Insbesondere durch die Krümmung wird dann die Luftströmungsrichtung aus der Normalströmrichtung in die davon abweichende Strömungsrichtung senkrecht zur Ablösekante gelenkt, um das vorteilhafte Strömungsverhalten zu erreichen. Dadurch, dass das jeweilige Strömungsleitelement in Normalluftströmungsrichtung ausgerichtet beginnt, wird ein vorteilhaftes Aufnehmen des Luftraums beziehungsweise des Fahrtwinds mit einer geringen Geräuschemission und geringem Widerstand gewährleistet.

Erfindungsgemäß ist an einer Oberseite und/oder an einer Unterseite des Spiegelfuß jeweils zumindest ein Strömungsleitelement angeordnet. Das jeweilige Strömungsleitelement an der Unterseite ist für den Benutzer in der Regel nicht sichtbar, was den optischen Eindruck verbessert. Darüber hinaus wird vermieden, dass die Funktion der Strömungsleitelemente durch beispielsweise Eis- oder Schneebildung auf der Oberseite des Spiegelfuß vermindert wird. Vorzugsweise sind an der Oberseite und der Unterseite jeweils mehrere Strömungsleitelemente angeordnet.

Erfindungsgemäß ist bevorzugt vorgesehen, dass der Spiegelfuß dazu ausgebildet ist, wie vorstehend bereits erwähnt, schräg von dem Kraftfahrzeug zu dem Spiegelgehäuse an dem Kraftfahrzeug zu verlaufen, um mechanische Vorteile zu erreichen, die eine robuste Halterung des Spiegelgehäuses auch bei hohen Luftströmungsgeschwindigkeiten gewährleistet. Dies hat insbesondere zur Folge, dass die Ablösekante des Spiegelfuß sich nicht senkrecht, sondern schräg zur Luftströmungsrichtung bei Geradeausfahrt beziehungsweise zur Fahrtrichtung oder Längserstreckung des Kraftfahrzeugs erstreckt.

Das erfindungsgemäße Kraftfahrzeugs zeichnet sich durch die erfindungsgemäße Ausbildung der Spiegelvorrichtung aus. Es ergeben sich hierdurch die bereits genannten Vorteile. Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: ein Kraftfahrzeug mit einer vorteilhaften Spiegelvorrichtung in einer vereinfachten Detaildarstellung und
- Figur 2: eine perspektivische Detaildarstellung der Spiegelvorrichtung.

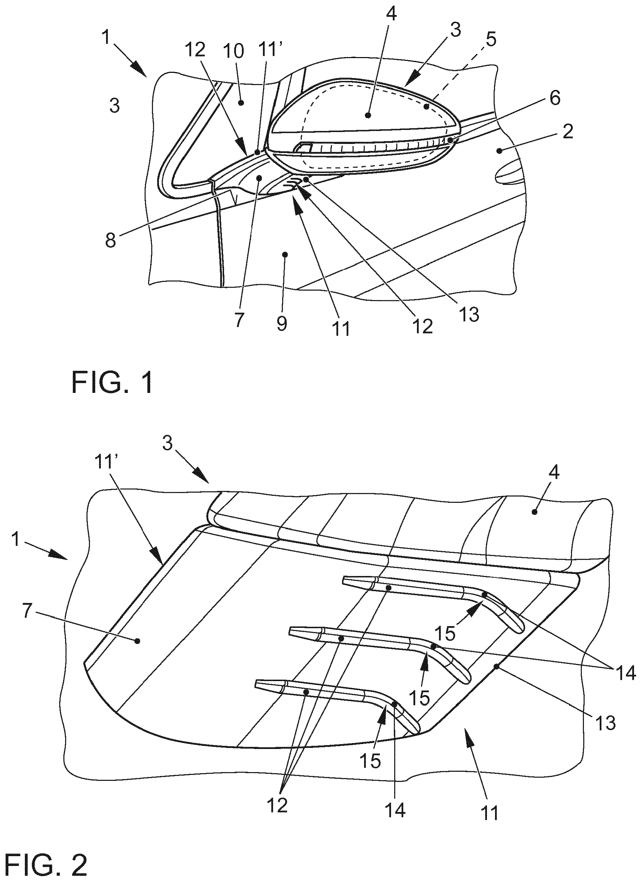

Figur 1 zeigt in einer perspektivischen Darstellung einen Abschnitt eines Kraftfahrzeugs 1, das im Bereich einer vorderen Fahrzeugtür 2 eine Außenspiegelvorrichtung 3 aufweist. Die Außenspiegelvorrichtung 3 weist ein Spiegelgehäuse 4 auf, das einen in Figur 1 nur gestrichelt dargestellten Spiegel 5 trägt, der einem Fahrer des Kraftfahrzeus 1 als Außenspiegel dient. Das Spiegelgehäuse 4 ist dabei strömungsoptimiert ausgebildet und weist außerdem einen ansteuerbaren Leuchtstreifen 6, der beispielsweise als Blinker verwendet wird, auf.

Das Spiegelgehäuse 4 ist durch einen Spiegelfuß 7 an einer Außenhaut 8 des Kraftfahrzeugs 1 befestigt. In diesem Fall wird die Außenhaut 8 von einem Verkleidungsteil 9 der Fahrzeugtür 2 gebildet. Der Spiegelfuß 7 setzt auf der Außenhaut 8 auf, ist jedoch bevorzugt mit einem unterhalb der Außenhaut 8 beziehungsweise Verkleidungsteils 9 angeordneten Karosserieelements fest verbunden. Vorliegend liegt dabei der Spiegelfuß 7 direkt unterhalb eines Fensters 10 auf dem Verkleidungsteil 9 auf.

Der Spiegelfuß 7 ist dabei derart ausgebildet, dass er sich schräg von seinem der Fahrzeugtür 2 zugewandten Ende zu dem Spiegelgehäuse 4 erstreckt, wobei sein der Fahrzeugtür 2 zugewandtes Ende in Fahrtrichtung vorsteht, wodurch eine aerodynamisch vorteilhafte Ausbildung der Außenspiegelvorrichtung 3 geboten wird, die insbesondere eine hohe Robustheit gewährleistet.

An der der Fahrbahn zugewandten Unterseite 11 sowie an der von der Unterseite 11 abgewandten Oberseite 11' weist der Spiegelfuß 7 jeweils mehrere Strömungsleitelemente 12 auf, die dazu dienen, die durch den Fahrtwind bedingte Luftströmung vorteilhaft zur Vermeidung von Windgeräuschen und Verwirbelungen zu führen.

Figur 2 zeigt eine perspektivische Detailansicht der Unterseite 11 des Spiegelfuß 7. Vorliegend weist der Spiegelfuß 7 drei Strömungsleitelemente 12 auf, die sich entlang der Unterseite 11 in Richtung einer Ablösekante 13 des Spiegelfuß 7 erstrecken. Dabei sind die Strömungsleitelemente 11 jeweils als Stegelement 14 ausgebildet. Die Strömungsleitelemente 12 erstrecken sich parallel zueinander und weisen jeweils einen gekrümmten Abschnitt 15 auf. Dadurch wird erreicht, dass die Strömungsleitelemente 12 an ihrem in Strömungsrichtung vorneliegenden Anfang oder Beginn sich parallel zur Normalströmungsrichtung des Fahrtwindes bei Vorwärtsbewegung des Kraftfahrzeugs 1 erstrecken, und an ihrem der Ablösekante 13 zugewandten Ende senkrecht zu der Ablösekante 13. Die Strömungsleitelemente 12 auf der Oberseite 11' sind entsprechend ausgebildet.

Dadurch wird der Luftstrom an der Unterseite 11 des Spiegelfuß 7 senkrecht zur Ablösekante 13 umgeleitet, wodurch der cW-Wert der Außenspiegelvorrichtung 3 sowie Schallemissionen insbesondere des Spiegelfuß 7 auf ein Niveau reduziert werden, das in etwa den Niveau eines Spiegelfuß entspricht, der keine schräge Ablösekante 13 beziehungsweise keine schräge Ausbildung des Spiegelfuß 7, wie sie vorliegend vorgesehen ist, aufweist.

Alternativ zu der dargestellten Ausführung der Strömungsleitelemente 12 als Stegelemente 14 ist es auch denkbar, die Strömungsleitelemente 12 als nutförmige Vertiefungen an der Unterseite 11 des Spiegelfuß 7 auszubilden.

Alternativ zu dem vorstehend dargestellten Ausführungsbeispiel ist in dem Spiegelgehäuse 4 anstelle eines Spiegelelements 5 ein Kamerasensor angeordnet, sodass die Außenspiegelvorrichtung eine digitale Außenspiegelvorrichtung ausbildet, welche insbesondere im Innenraum des Kraftfahrzeugs eine Anzeigeeinrichtung zum Darstellen des von dem Kamerasensor erfassten Bilds der Umgebung des Kraftfahrzeugs aufweist.

### Bezugszeichenliste

- 1: Kraftfahrzeug
- 2: Fahrzeugtür
- 3: Außenspiegelvorrichtung
- 4: Spiegelgehäuse
- 5: Spiegelelement
- 6: Leuchtstreifen
- 7: Spiegelfuß
- 8: Außenhaut
- 9: Verkleidungsteil
- 10: Fenster
- 11: Unterseite
- 11': Oberseite
- 12: Strömungsleitelement
- 13: Ablösekante
- 14: Stegelement
- 15: Abschnitt

## Patentansprüche

1. Außenspiegelvorrichtung (3) für ein Kraftfahrzeug (1), mit einem Spiegelgehäuse (4), in welchem zumindest ein Spiegelelement (5) und/oder ein Kamerasensor angeordnet ist, mit einem Spiegelfuß (7), der einendig das Spiegelgehäuse (4) trägt und anderendig an dem Kraftfahrzeug (1) befestigbar oder befestigt ist, und mit zumindest einem Strömungsleitelement (12) zum Beeinflussen einer Luftströmung an der Außenspiegelvorrichtung (3), wobei an einer Unterseite (11) und/oder an einer Oberseite (11') des Spiegelfuß (7) jeweils mehrere parallel zueinander verlaufend ausgebildete Strömungsleitelemente (12) angeordnet sind, wobei das jeweilige Strömungsleitelement (12) als von dem Spiegelfuß (7) vorstehendes Stegelement (14) derart ausgebildet ist, dass es senkrecht zur Ablösekante (13) der Luftströmung an dem Spiegelfuß (7) an der Ablösekante (13) endet, und wobei der Spiegelfuß derart ausgebildet ist, dass sich die Ablösekante (13) schräg zur Luftströmungsrichtung bei Geradeausfahrt des Kraftfahrzeugs (1) erstreckt.

2. Außenspiegelvorrichtung nach Anspruch 1, **dadurch gekennzeichnet, dass** das jeweilige Strömungsleitelement (12) einstückig mit dem Spiegelfuß (7) ausgebildet ist.

3. Außenspiegelvorrichtung nach einem der vorhergehenden Ansprüche, **dadurch gekennzeichnet, dass** das jeweilige Strömungsleitelement (12) zumindest einen gekrümmten Abschnitt (15) in seiner Längserstreckung aufweist.

4. Außenspiegelvorrichtung nach einem der vorhergehenden Ansprüche, **dadurch gekennzeichnet, dass** das jeweilige Strömungsleitelement (12) parallel zu einer Normalluftanströmrichtung an dem Spiegelfuß (7) beginnt.

5. Kraftahrzeug (1) mit wenigstens einer an seiner Außenhaut (8) angeordneten Außenspiegelvorrichtung (3), **gekennzeichnet durch** die Ausbildung der Außenspiegelvorrichtung (3) nach einem der Ansprüche 1 bis 4.

## Claims

1. Exterior mirror apparatus (3) for a motor vehicle (1), having a mirror housing (4), in which at least one mirror element (5) and/or a camera sensor is arranged, having a mirror foot (7), which carries at its one end the mirror housing (4) and is attachable or attached at its other end to the motor vehicle (1), and having at least one flow guiding element (12) for influencing an air flow at the exterior mirror apparatus (3), wherein in each case a plurality of parallel flow guiding elements (12) are arranged at a lower side (11) and/or at an upper side (11') of the mirror foot (7), wherein the respective flow guiding element (12) is embodied in the form of a rib element (14) projecting from the mirror foot (7) such that it terminates perpendicular to the peel edge (13) of the air flow at the mirror foot (7) at the separation edge (13), and wherein the mirror foot is embodied such that the separation edge (13) extends at an angle to the air flow direction when the motor vehicle (1) travels straight ahead.

2. Exterior mirror apparatus according to Claim 1, **characterized in that** the respective flow guiding element (12) is formed in one piece with the mirror foot (7).

3. Exterior mirror apparatus according to either of the preceding claims, **characterized in that** the respective flow guiding element (12) has at least one curved portion (15) in its longitudinal extent.

4. Exterior mirror apparatus according to one of the preceding claims, **characterized in that** the respective flow guiding element (12) begins parallel to a normal incident air flow direction at the mirror foot (7).

5. Motor vehicle (1) having at least one exterior mirror apparatus (3) disposed on its outer skin (8), **characterized by** the embodiment of the exterior mirror apparatus (3) according to one of Claims 1 to 4.

## Revendications

1. Dispositif de rétroviseur extérieur (3) pour un véhicule automobile (1), comprenant un boîtier de rétroviseur (4) dans lequel est disposé au moins un élément de miroir (5) et/ou un capteur de caméra, avec une base de rétroviseur (7) qui porte à une extrémité le boîtier de rétroviseur (4) et qui est ou peut être fixée à l'autre extrémité au véhicule automobile (1), et comprenant au moins un élément de guidage d'écoulement (12) pour influencer un écoulement d'air au niveau du dispositif de rétroviseur extérieur (3), plusieurs éléments de guidage d'écoulement (12) réalisés à chaque fois de manière à s'étendre parallèlement les uns aux autres étant disposés au niveau d'un côté inférieur (11) et/ou au niveau d'un côté supérieur (11') de la base de rétroviseur (7), l'élément de guidage d'écoulement respectif (12) étant réalisé en tant qu'élément de nervure (14) faisant saillie depuis la base de rétroviseur (7) de telle sorte qu'il se termine perpendiculairement à l'arête de décollement (13) de l'écoulement d'air au niveau de la base de rétroviseur (7) contre l'arête de décollement (13), et la base de rétroviseur étant réalisée de telle sorte que l'arête de décollement (13) s'étende obliquement par rapport à la direction d'écoulement d'air en conduite en ligne droite du véhicule automobile (1).

2. Dispositif de rétroviseur extérieur selon la revendication 1, **caractérisé en ce que** l'élément de guidage d'écoulement respectif (12) est réalisé d'une seule pièce avec la base de rétroviseur (7).

3. Dispositif de rétroviseur extérieur selon l'une quelconque des revendications précédentes, **caractérisé en ce que** l'élément de guidage d'écoulement respectif (12) présente au moins une portion courbe (15) dans son étendue longitudinale.

4. Dispositif de rétroviseur extérieur selon l'une quelconque des revendications précédentes, **caractérisé en ce que** l'élément de guidage d'écoulement respectif (12) commence parallèlement à une direction d'afflux d'air normale au niveau de la base de rétroviseur (7).

5. Véhicule automobile (1) comprenant au moins un dispositif de rétroviseur extérieur (3) disposé au niveau de sa peau extérieure (8), **caractérisé par** la réalisation du dispositif de rétroviseur extérieur (3) selon l'une quelconque des revendications 1 à 4.
